# EUROPEAN PATENT APPLICATION

(11) **EP 2 555 101 A1**
(43) Date of publication of application: **06.02.2013**
(21) Application number: 11762142.5
(22) Date of filing: 28.02.2011
(51) Int. Cl.: G06F 3/048, G06F 3/041

(54) **INFORMATION DEVICE AND MOBILE INFORMATION DEVICE**

(30) Priority: 29.03.2010 JP 2010074682
(71) Applicant: Panasonic Corporation, Kadoma-shi Osaka 571-8501 (JP)
(72) Inventor: ENDO, Tomohiko, Osaka-shi, Osaka 540-6207 (JP); LI, Ying, Osaka-shi, Osaka 540-6207 (JP)
(74) Representative: Grünecker, Kinkeldey, Stockmair & Schwanhäusser
(86) International application number: PCT/JP2011/001166
(87) International publication number: WO 2011/121888

(57) **Abstract**

A mobile information device in which items on a touchscreen display can be automatically rearranged in areas on the touchscreen display according to the characteristics of a user, the specifications of the device, or input means to the touchscreen display.

The mobile information device includes an input control unit 21 that controls input information related to used items among a plurality of items and used areas through input operation, an input information analysis unit 22 that analyzes the used items and the used areas based on the input information, a user use information management unit 23 that determines the use frequency orders of the used items and the used areas based on the analysis information of the input information analysis unit, and manages user use information that associates additional information with the input information, and a display configuration control unit 25 that determines an arrangement of the plurality of items on the touchscreen display based on the use frequency orders of the used items and the used areas. With the above configuration, the item higher in the use frequency order can be automatically rearranged in the area higher in the use frequency order on the touchscreen display.

## Description

### Technical Field

The present invention relates to a mobile information device including a touchscreen display, and more particularly to a function of rearranging items higher in use frequency order in an area higher in use frequency order on a touchscreen display.

### Background Art

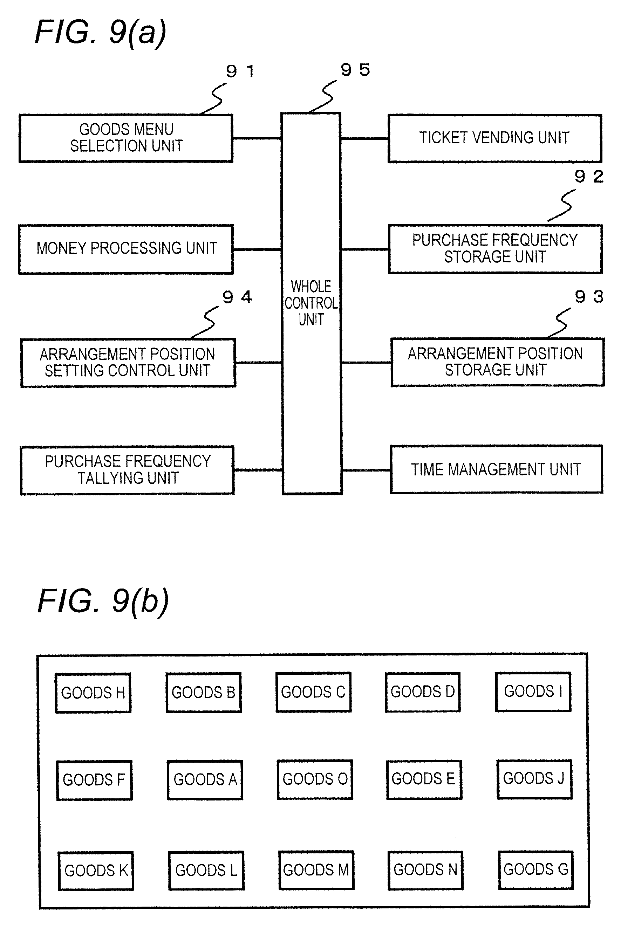

As illustrated in FIG. 9(a), a conventional terminal device having a touchscreen display includes goods menu selection unit 91 that selects a plurality of goods menus displayed on the touchscreen display, a purchase frequency storage unit 92 that stores a purchase frequency in each of the goods menus, an arrangement position storage unit 93 that stores an arrangement position of the goods menus therein, an arrangement position setting control unit 94 that rearranges the arrangement position of the plurality of goods menus based on the purchase frequency, and a whole control unit 95 that control the whole.

In an initial screen of the terminal device, the goods menus of goods A to goods O are arranged in order. There have been known that the goods (goods A) highest in the selection frequency of a user is arranged substantially at a center position of the touchscreen display based on the purchase frequency, or as illustrated in FIG. 9(b), the goods groups (goods A, goods O, goods E) higher in the selection frequency of the user are rearranged substantially at the center position of the touchscreen display (for example, refer to Patent Document 1).

### Related Art Documents

### Patent Documents

Patent Document 1: JP-A-2002-269596

### Summary of the Invention

### Problem to be Solved by the Invention

In the conventional terminal device having the touchscreen display, the goods menus higher in the selection frequency of the user, or a goods menu group higher in the selection frequency is rearranged substantially at the center position of the touchscreen display.

In the terminal device such as a ticket-vending machine used by a large indefinite number of users, substantially the center position of the touchscreen display is a position that falls under the user's observation, and at which the menu is easily selectable. The goods menus higher in the selection frequency of the user, or the goods menu group higher in the selection frequency of the user is rearranged at that position, to thereby improve the operability of the device use.

However, in the mobile information having the touchscreen display which is substantially monopolistically used by a party interested when the user is limited to an owner or a possessor, an area where input operation is easy to conduct and an area where the input operation is difficult to conduct occur in area on the touchscreen display (hereinafter referred to as "area") due to the characteristics (right handedness, left handedness, the size of a hand, how to grip the device, grip force, etc.) of the user, the specifications of the device (the size of the device, the mass of the device, the size of the display screen, etc.), or input means (finger input, pen input, etc.) to the touchscreen display. Also, there arises such a problem that the operability of the device use is not always improved by arranging the items higher in the use frequency of the user among functions (hereinafter referred to as "items") of buttons on the touchscreen display, substantially at the center position thereof.

The present invention is made in order to solve the above technical problem, and an object there of is to provide a mobile information device capable of improving the operability of the user by automatically rearranging the items on the touchscreen display on areas on the touchscreen display, for example, by automatically rearranging the item higher in the use frequency order in the area higher in the use frequency order on the touchscreen display according to the characteristics of the user, the specifications of the device, or the input means to the touchscreen display.

### Means for Solving the Problem

According to the present invention, there is provided an information device including: a display unit configured to display a plurality of items; an input unit configured to detect a touch input; an input information determination unit configured to determine a first operation conducted on any one of the plurality of items by the input unit for selecting any one of the plurality of items, and a second operation conducted on any one of a plurality of positions unrelated to positions corresponding to the plurality of items by the input unit for selecting none of the plurality of items, based on the touch input detected by the input unit; a first recording unit configured to count and record a frequency at which the first operation is conducted for each of the plurality of items; a second recording unit configured to count and record a frequency at which the second operation is conducted for each of the plurality of positions by the input unit; and a display configuration control unit configured to display an item higher in the frequency on which the first operation is conducted among the plurality of items, at a position higher in the frequency on which the second operation is conducted among the plurality of positions by the input unit.

In the information device according to the present invention, the first operation includes tap operation, and the second operation includes slide operation or flick operation.

With the above configuration, the use frequency orders of the used items and the used areas are determined according to an accumulated result of item information related to the items used by operation such as the tap operation for which the area is determined, and area information used by operation such as the slide operation or the flick operation for which the area is not determined, and the item higher in the use frequency order can be automatically rearranged in the area higher in the use frequency order based on the determined use frequency order.

In the information device according to the present invention, the input unit includes a touchscreen.

With the above configuration, the item higher in the use frequency order can be automatically rearranged in the area higher in the use frequency order on the touchscreen display based on the determined use frequency order.

According to the present invention, there is provided a mobile information device configured to display a plurality of items on a touchscreen display for conducting input operation through the touchscreen, the mobile information device including: an input control unit configured to input and control input information on used items among the plurality of items and used areas through the input operation; an input information analysis unit configured to analyze the used items and the used areas based on the input information; a user use information management unit configured to determine the use frequency orders of the used items and the used areas based on analysis information of the input information analysis unit, and manage user use information which associates additional information with the input information; and a display configuration control unit configured to determine an arrangement of the plurality of items on the touchscreen display based on the use frequency orders of the used items and the used areas.

With the above configuration, the use frequency orders of the used items and the used areas are determined according to an accumulated result of item information related to the items used by operation such as the tap operation for which the area is determined on the touchscreen display, and area information used by operation such as the slide operation or the flick operation for which the area is not determined on the touchscreen display, and the item higher in the use frequency order can be automatically rearranged in the area higher in the use frequency order on the touchscreen display based on the determined use frequency order.

In the mobile information device according to the present invention, the input information includes: touch coordinate positions and release coordinate positions on the touchscreen display; and the number of touches.

With the above configuration, information on the touch coordinate positions tapped by the operation such as the tap operation for which the area is determined on the touchscreen display, and the number of touches can be acquired.

Also, information on the touch coordinate position touched and the release coordinate position released by the operation such as the slide operation or the flick operation for which the area is not determined on the touchscreen display, and the number of touches can be acquired.

Further, a size of a contact area on the touchscreen display can be discriminated according to an output signal of a matrix switch configuring the touchscreen, thereby making it possible to discriminate whether the touchscreen display is touched by a tip of a finger, or a touch pen.

Also, in the mobile information device according to the present invention, the use frequency orders of the used items and the used areas are determined by arranging the number of touches in descending order.

With the above configuration, the use frequency order for each of all the items on the touchscreen display, and the use frequency order for each area can be determined.

In the mobile information device according to the present invention, the additional information includes time information and application information.

With the above configuration, the time information and the application information can be associated as the additional information with the item information related to the used items among the plurality of items on the touchscreen display, and the area information related to the used areas.

In the mobile information device according to the present invention, if areas higher in the use frequency order intersect with each other, the display configuration control unit determines an intersection as the area higher in the priority order, and if the areas higher in the use frequency order are dispersed, the display configuration control unit determines an area surrounded by connecting a plurality of higher points to each other as the area higher in the priority order.

With the above configuration, if the areas higher in the use frequency order intersect with each other on the touchscreen display, the intersection can be determined as the area highest in the priority order, and if the areas higher in the use frequency order are dispersed, the area surrounded by connecting the plurality of higher points to each other can be determined as the area higher in the priority order.

In the mobile information device according to the present invention, the display configuration control unit displays the items used in the areas higher in the use frequency order in a larger size, and displays the items other than the items used in the area other than the areas higher in the use frequency order in a smaller size.

With the above configuration, the items used in the areas higher in the use frequency order on the touchscreen display can be displayed in a larger size, and the items other than the items used in the area other than the areas higher in the use frequency order can be displayed in a smaller size.

In the mobile information device according to the present invention, the display configuration control unit displays an item of a lower layer or a same system of the item higher in the use frequency order in the area other than the area higher in the use frequency order.

With the above configuration, the items of a lower layer of the items higher in the use frequency order, or the items of the same system among the plurality of items can be displayed in the area other than the area higher in the use frequency order on the touchscreen display.

Also, in the mobile information device according to the present invention, the display configuration control unit displays an other menu access item as an access to a function lower in the use frequency which is not displayed on the touchscreen display.

With the above configuration, the other menu access items can be displayed as the access to the functions lower in the use frequency, which are not displayed on the touchscreen display.

Also, in the mobile information device according to the present invention, the display configuration control unit displays the additional information other than the plurality of items in the area other than the area higher in the use frequency order in a superimposed manner.

With the above configuration, the additional information other than the plurality of items can be displayed in the area other than the area higher in the use frequency order on the touchscreen display in a superimposed manner.

Also, in the mobile information device according to the present invention, the display configuration control unit arranges the plurality of items based on sensor information from a built-in pressure sensor.

With the above configuration, the plurality of items can be arranged on the touchscreen display based on the sensor information from the built-in pressure sensor.

### Advantages of the Invention

The present invention can provide a mobile information device with an advantage of improving the operability of the user by automatically rearranging the items on the touchscreen display on areas on the touchscreen display, for example, by automatically rearranging the item higher in the use frequency order in the area higher in the use frequency order on the touchscreen display according to the characteristics of the user, the specifications of the device, or the input means to the touchscreen display.

### Brief Description of the Drawings

FIGs. 1(a) and 1(b) are diagrams illustrating input operation of a mobile information device according to a first embodiment of the present invention.
FIG. 2 is a block diagram illustrating a configuration of the mobile information device according to the first embodiment of the present invention.
FIG. 3(a) is a diagram illustrating an arrangement of items in the mobile information device according to the first embodiment of the present invention, and FIG. 3(b) is a diagram illustrating a use frequency order of the items.
FIG. 4(a) is a diagram illustrating an arrangement of areas in the mobile information device according to the first embodiment of the present invention, and FIG. 4(b) is a diagram illustrating a use frequency order of the areas.
FIG. 5 is a diagram illustrating a rearrangement of the items in the mobile information device according to the first embodiment of the present invention.
FIG. 6 is a diagram illustrating a rearrangement of items in a mobile information device according to a second embodiment of the present invention.
FIG. 7 is a block diagram illustrating a configuration of a mobile information device according to a third embodiment of the present invention.
FIG. 8(a) is a diagram illustrating holding of the mobile information device according to the third embodiment of the present invention, and FIG. 8(b) is a diagram illustrating a rearrangement of items.
FIGs. 9(a) and 9(b) are block diagrams illustrating a configuration of a conventional terminal device.

### Mode for Carrying Out the invention

### (First Embodiment)

Hereinafter, a description will be given of a mobile information device according to an embodiment of the present invention with reference to the drawings.

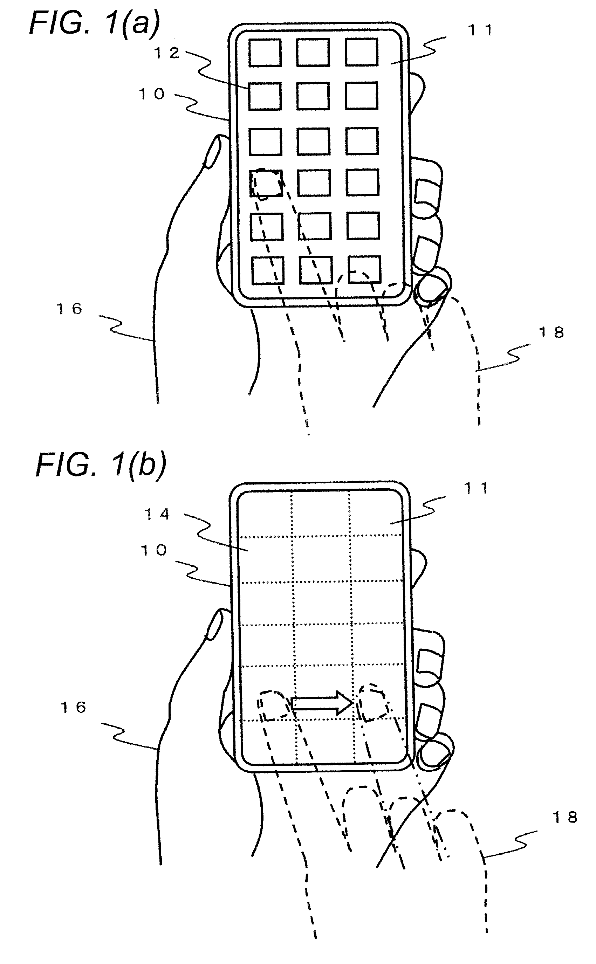

FIG. 1 is a diagram illustrating input operation of a mobile information device according to a first embodiment of the present invention.

A device, which is generally called "mobile information device 10", includes a touchscreen 11. Items 12 cooperating with device functions, with a plurality of pictrograms, numbers, and alphabets, are displayed on a touchscreen display. The items 12 are tapped as operation areas with a fingertip or an exclusive touch pen to conduct input operation.

Also, when the items 12 on anteroposterior screens which cannot been displayed on a single screen are searched, or when a page is turned or a screen display area is moved in an electronic book, the input operation is conducted by sliding or flicking an area in which operation area is not determined on the touchscreen display with the fingertip or the exclusive touch pen.

FIG. 1(a) illustrates an appearance of the input operation in which the mobile information device 10 is held by a left hand 16, and an item (item on a fourth column of a left line in the figure) cooperating with a function required by a user is selected from 18 items 12 on the touchscreen display, and tapped with an index finger of a right hand 18.

When a necessary item is selected from a plurality of items arranged on the touchscreen display, and tapped in the input operation, in the ease of tapping the selected item with the fingertip or the touch pen tip, positions where tapping is easy and positions where tapping is not easy occur depending on the characteristics of the user (right handedness, left handedness, the size of a finger, how to grip the device, grip force, etc.), and the specifications of the device (the size of the device, the mass of the device, an item size, etc.).

FIG. 1(b) illustrates an appearance of the input operation due to slide operation in which the mobile information device 10 is held by the left hand 16, a part of 18 areas 14 on the touchscreen display is touched by the index finger of the right hand 18 (area on a fifth column of a left line in the figure), and the index finger is slid to an area on the fifth column of a right line rightward (in a direction of an arrow) in a state where the index finger touches the touchscreen display. For facilitation of understanding, the touchscreen display is divided into three pieces in a lateral direction and divided into six pieces in a longitudinal direction so as to be sectioned into 18 areas 14.

Also, the operation is conducted through the slide operation in which the fingertip or the touch pen tip touches the touchscreen display, and is slid in a horizontal direction or in a vertical direction in the touched state, or through the flick operation in which the touchscreen display is flicked with the fingertip or the touch pen in the touched state. In this case, as with the input operation due to the tapping operation, in the ease of sliding or flicking the fingertip or the touch pen tip, positions where sliding or flicking is easy and positions where sliding or flicking is not easy occur depending on the characteristics of the user (right handedness, left handedness, the size of a finger, how to grip the device, grip force, etc.), and the specifications of the device (the size of the device, the mass of the device, an item interval, etc.).

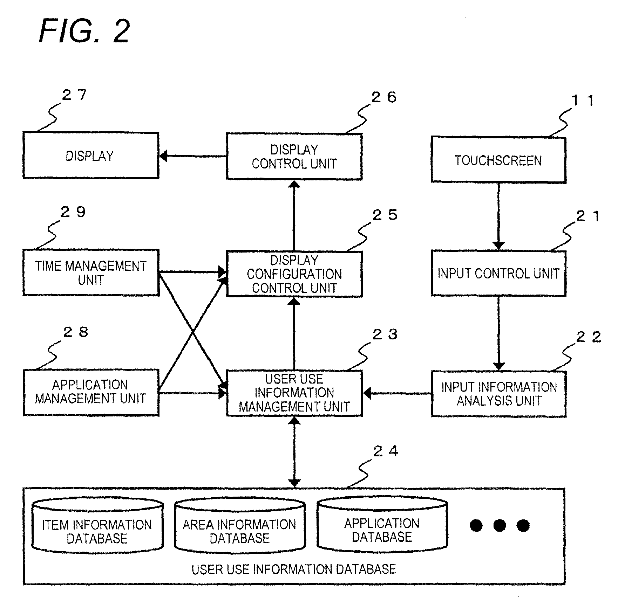

FIG. 2 is a block diagram illustrating a configuration of the mobile information device according to the first embodiment.

Referring to FIG. 2, the mobile information device according to this embodiment displays a plurality of items on the touchscreen display in which the input operation is conducted through the touchscreen 11. An input control unit 21 conducts input control of input information related to used items among a plurality of items and used areas through the input operation, and management and monitoring of error information.

An input information analysis unit 22 analyzes coordinate information on the used items and the used areas based on the input information.

A user use information management unit 23 determines the use frequency orders of the used items and the used areas based on the analysis information of the input information analysis unit 22, and manages user use information that associates additional information with the input information.

A user use information database 24 classifies the user use information into an item information database, an area information database, and an application database according to the respective functions, and stores and updates the classified information as user use information databases.

A display configuration control unit 25 determines an arrangement of the plurality of items on the touchscreen display based on the use frequency orders of the used items and the used areas.

A display control unit 26 controls display on a display 27 such as a liquid crystal display or an organic EL display based on an arrangement instruction from the display configuration control unit 25.

An application management unit 28 manages a variety of applications associated with the respective items on the touchscreen display.

A time management unit 29 manages a time at which the input operation on the touchscreen display has been implemented, and a time at which the display configuration control unit 25 determines the rearrangement.

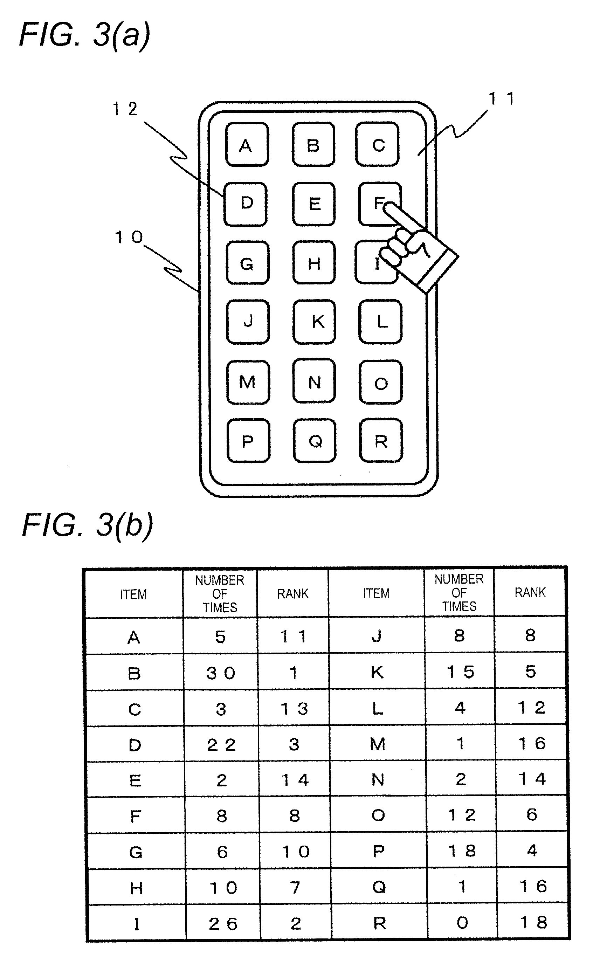

In the mobile information device configured as described above, a rearrangement procedure of the items will be described with reference to FIGS. 3, 4, and 5.

FIG. 3 is a diagram illustrating the arrangement and the use frequency order of the items.

FIG. 3(a) illustrates a state in which 18 items 12 different in function are arranged on the touchscreen display of the mobile information device 10 in which the input operation is conducted through the touchscreen 11.

The arrangement of the items 12 may be an arrangement of an initial state set by a manufacturer of the mobile information device 10, or may be an arrangement customized by the user. For facilitation of understanding, symbols "A" to "R" are assigned to the respective items.

FIG. 3(b) is a diagram in which, in the arrangement of the items illustrated in FIG. 3(a), the use frequencies of the respective items after the user has used the mobile information device 10 for a given period, that is, the number of times at which the respective items on the touchscreen display are used through the tapping operation, are accumulated, and the respective items are ranked in order of descending the number of times.

The order of the use frequencies is found from FIG. 3(b) such that an item "B" on a first column of a middle line is most used, an item "I" on a third column of a right line is second most used, and an item "D" on a second column of the left line is subsequently used.

That is, it is found that a possessor of the mobile information device 10 most uses a function cooperating with the item "B", and second most uses a function cooperating with the item "I".

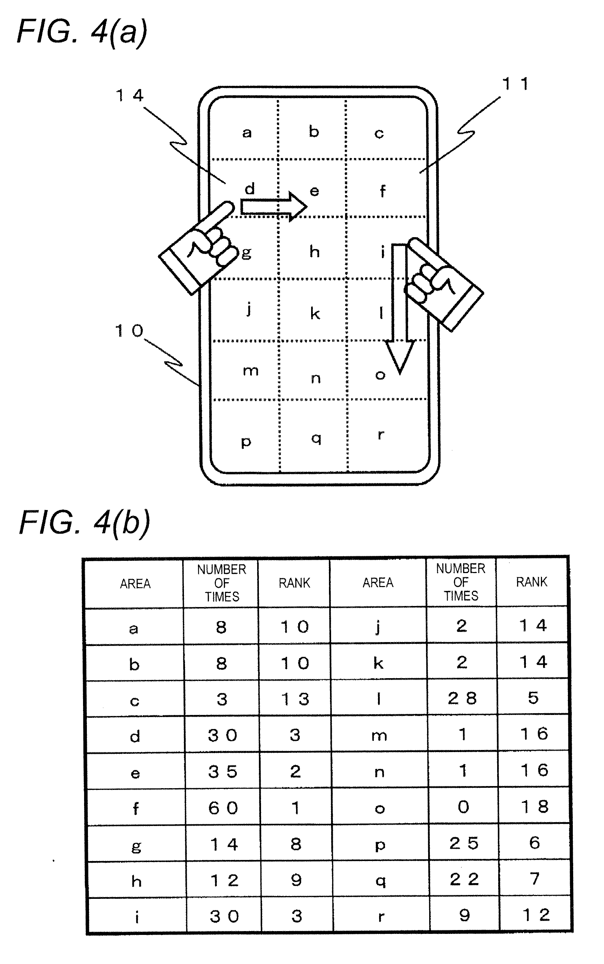

FIG. 4 is a diagram illustrating an arrangement and a use frequency order of the areas.

FIG. 4(a) illustrates a state in which the touchscreen display of the mobile information device 10 is divided into 18 areas. For facilitation of understanding, symbols "a" to "r" are assigned to the respective areas, and directions and distances of slides are indicated with hand patterns. The slide direction may be any one of a vertical direction, a horizontal direction, and an oblique direction. Also, the slide discrimination is determined according to the number of pixels of matrix switches configuring the touchscreen 11, and therefore the slide operation can be discriminated even with a slight distance movement within the same area without any problem.

FIG. 4(b) is a diagram in which, in the arrangement of the areas illustrated in FIG. 4(a), the use frequencies of the respective areas after the user has used the mobile information device 10 for a given period, that is, the number of times at which the respective areas on the touchscreen display are used through the slide operation or the flick operation are accumulated, and the respective areas are ranked in order of descending the number of times. The number of times results from counting up the touched area, the slid area, and the released area on the touchscreen display. For example, in an example of sliding downward in FIG. 4, the area "i", the area "I", and area "o" are to be counted up.

The order of the use frequencies is found from FIG. 4(b) such that an area "f" on a second column of the right line is most used, an area "e" on the second column of the middle line is second most used, and an area "d" on the second column of the left line is subsequently used.

That is, it is found that the possessor of the mobile information device 10 most uses an area including the area "f" in the horizontal direction through the slide operation, and second most uses an area including the area "f" downward.

In the above embodiment, in order to grasp the use frequencies, information for a given period is accumulated. However, the given period is not limited to a time, but may be, for example, the occurrence of an event such as application addition or application deletion.

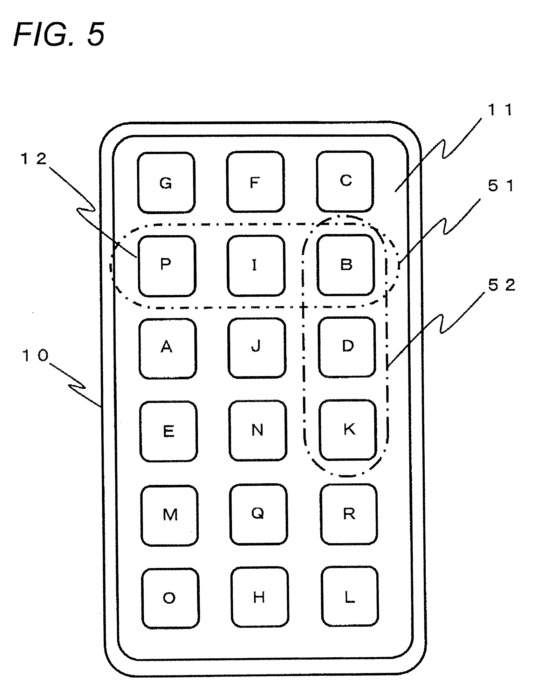

FIG. 5 is a diagram illustrating a rearrangement of the items.

First, it is found from FIG. 4(b) that the user of the mobile information device 10 most uses an area (oval 51) including the area "f" in the horizontal direction, and second most uses an area (oval 52) including the area "f" downward, on the touchscreen display through the slide operation or the flick operation.

Under the circumstances, because the area (oval 51) first highest in the use frequency order, and the area (oval 52) second highest in the use frequency order intersect with each other, an intersection (area "f") is determined as the area highest in the priority order, and at that position, the item "B" highest in the use frequency order in FIG. 3(b) is first arranged.

Subsequently, the item "I" second highest in the use frequency order in FIG. 3(b) is arranged in the area "e" second highest in the use frequency order in FIG. 4(b).

Subsequently, the item "D" third highest in the use frequency order in FIG. 3(b) is arranged in the area "d" third highest in the use frequency order in FIG. 4(b). Likewise, all of the items are rearranged as illustrated in FIG. 5.

As described above, according to the mobile information device of the present invention, for example, the items higher in the use frequency order are automatically rearranged in the areas higher in the use frequency order on the touchscreen display according to the characteristics of the user, the specifications of the device, or the input means to the touchscreen display. Thus, the items on the touchscreen display can be automatically rearranged on the areas on the touchscreen display so that the operability of the user can be improved.

In the above embodiment, the description has been given of the rearrangement of the items in the case where the areas higher in the use frequency order intersect with each other. However, when the area highest in the use frequency order exists alone, the item highest in the use frequency order is rearranged in that area. Also, when the areas higher in the use frequency order are dispersed, an area surrounded by connecting a plurality of higher points may be determined as the area higher in the priority order, the item higher in the use frequency order may be rearranged in that area.

Also, in the above embodiment, the sizes of the item before and after the item is rearranged have not been described. The sizes may be identical between before and after the rearrangement. Alternatively, the item rearranged in the area higher in the use frequency order can be changed to a larger size and displayed. The items rearranged in the area other than the area higher in the use frequency order can be changed to a smaller size, or displayed with the same size as that before the rearrangement. The item sizes before and after the rearrangement are changed and displayed with the results that the items higher in the use frequency order are highly visible on the touchscreen display to further improve the operability of the user.

Also, in the above embodiment, the used areas and the used items are rearranged in correspondence with the use frequency orders. However, in the area other than the area higher in the use frequency order, instead of the rearrangement of the items lower in the corresponding use frequency order, the items in a lower layer of the items higher in the use frequency order, for example, the lower items can be set to a photographing mode or a playback mode with a camera as a higher item.

Also, instead of the rearrangement of the items lower in the corresponding use frequency order, the items of the same system as the items higher in the use frequency order, for example, the higher item can be set to the camera, and the lower item can be set to a movie. Thus, instead of the rearrangement of the items lower in the corresponding use frequency order, another item is arranged so that an intended function can be accessed through a smaller number of operation procedures to further improve the operability of the user.

Also, in the above embodiment, the used areas and the used items are rearranged in correspondence with the use frequency orders. However, other menu access items are arranged for access to the items not displayed on the touchscreen display with the results that the items lower in the use frequency order are easily accessed to further improve the operability of the user.

### (Second Embodiment)

A block diagram illustrating a configuration of a mobile information device according to a second embodiment of the present invention is identical with the block diagram illustrating the configuration of the mobile information device according to the first embodiment of the present invention, and therefore will be omitted.

Also, the use frequency orders of the used items and the used areas are determined according to the accumulation results of the item information related to the items used by the operation such as the tap operation in which the area is determined on the touchscreen display, and the area information used by the operation such as the slide operation or the flick operation in which the operation area is not determined on the touchscreen display. The items higher in the use frequency order are automatically rearranged in the areas higher in the use frequency order on the touchscreen display based on the determined use frequency order. This arrangement procedure is identical with that in the first embodiment, and therefore will be omitted.

A difference between the second embodiment and the first embodiment resides in that several items lower in the use frequency order are not rearranged on the touchscreen display, but other information other than the items stored in the user use information database 24 is called instead of those items, and displayed in an superimposed manner.

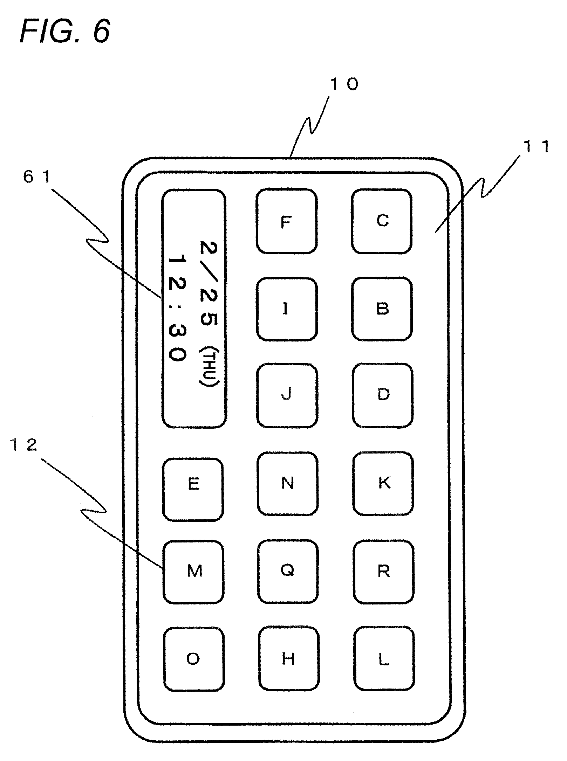

FIG. 6 is a diagram illustrating a rearrangement of the items in the mobile information device according to this embodiment. The arrangement procedure of rearranging the areas higher in the use frequency order and the items higher in the use frequency order, correspondingly, is identical with that in the first embodiment, and most of the items are rearranged based on the arrangement procedure.

Referring to FIG. 6, the items lower in the corresponding use frequency order are not rearranged in the areas on the first to third columns of the left line, which are areas lower in the use frequency order, but instead data information 61 is displayed in the superimposed manner as other information other than the items.

The other information other than the items includes calendar display, time display, mascot display, memo display, incoming display, and telop display.

As described above, according to the mobile information device of this embodiment, the use frequency orders of the used items and the used areas are determined according to the accumulation results of the item information related to the items used by the operation such as the tap operation in which the area is determined on the touchscreen display, and the area information used by the operation such as the slide operation or the flick operation in which the operation area is not determined on the touchscreen display. The items higher in the use frequency order are automatically rearranged in the areas higher in the use frequency order on the touchscreen display based on the determined use frequency order. Because other useful information is displayed in the superimposed manner instead of several items lower in the use frequency order, the operability of the user is improved, and the other information other than the effective items is displayed, to thereby improve the convenience.

In the above embodiment, the items higher in the use frequency order and the other useful information are displayed in the superimposed manner. Alternatively, only the other useful information is displayed when the mobile information device is not used to enable power saving.

### (Third Embodiment)

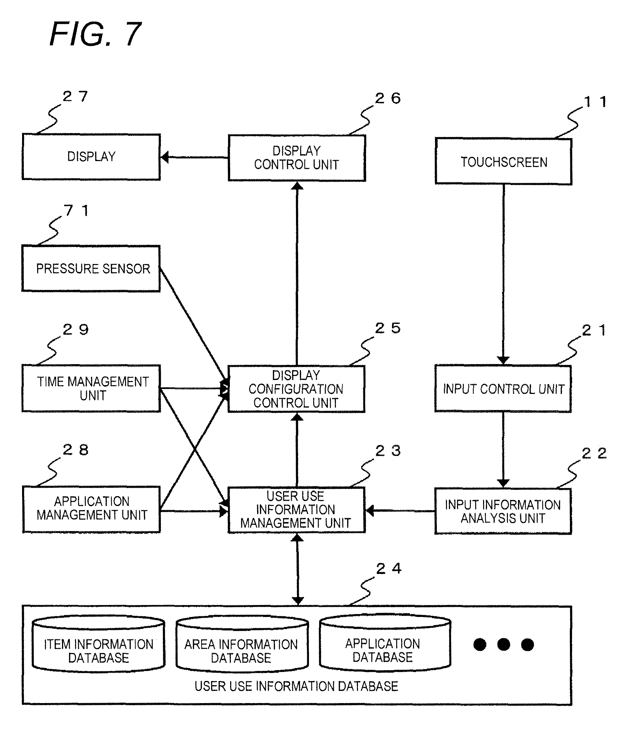

FIG. 7 is a block diagram illustrating a configuration of a mobile information device according to a third embodiment of the present invention.

Referring to FIG. 7, the same configurations as those in the first embodiment illustrated in FIG. 2 are denoted by identical reference numerals, and a description thereof will be omitted.

The mobile information device according to this embodiment includes a pressure sensor 71 that detects a holding position of the mobile information device by the user as illustrated in FIG. 7, in addition to the configuration of the mobile information device according to the first embodiment illustrated in FIG. 2.

The pressure sensor 71 is installed within a housing so as to cover a relatively wide range of a right lateral surface and a left lateral surface of the mobile information device. A left sensor touch portion and a right sensor touch portion, which will be described later, are exposed from a front surface of the housing.

When the mobile information device configured as described above is held by the user, a finger surface of the user touches the left sensor touch portion and the right sensor touch portion. The pressure sensor 71 senses a contact position, and outputs contact position information to the display configuration control unit 25.

The display configuration control unit 25 determines an arrangement position of the items on the touchscreen display based on the contact position information from the pressure sensor 71.

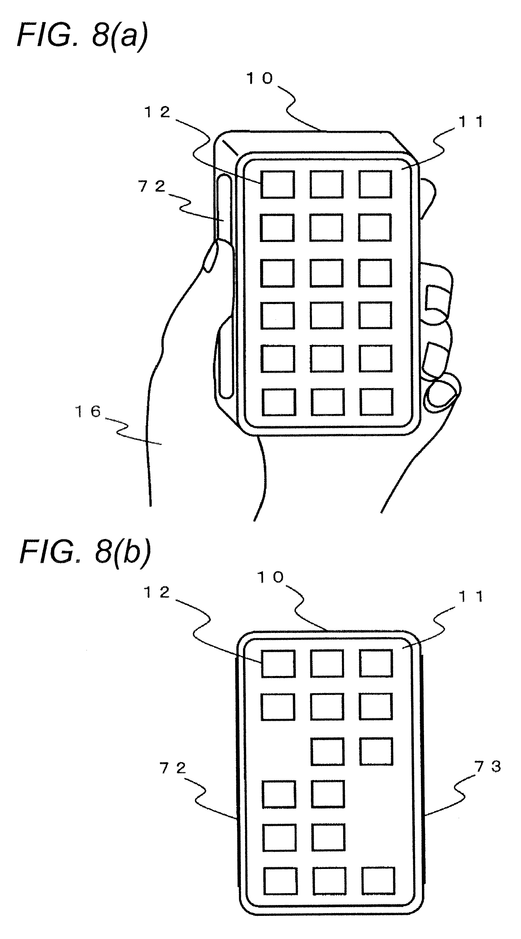

FIG. 8 is a diagram illustrating a holding state of the mobile information device having the pressure sensor, and the rearrangement of the items.

FIG. 8(a) illustrates a state in which a mobile information device 80 is held by the left hand 16, and a thumb touches the vicinity of a center of a left sensor touch portion 72 on the left lateral surface of the mobile information device 80. Therefore, the pressure sensor 71 outputs the contact position information corresponding to that area to the display configuration control unit 25. At the same time, because a middle finger and an annular finger touch the vicinity of the center of a right sensor touch portion 73 on the right lateral surface of the mobile information device 80, and a position slightly close to an edge from the vicinity of the center, respectively, the pressure sensor 71 outputs the contact position information corresponding to that area to the display configuration control unit 25.

The display configuration control unit 25 determines the arrangement position of the items 12 arranged on the touchscreen display based on the contact position information from the pressure sensor 71.

FIG. 8(b) is a diagram illustrating the arrangement of the items 12 on the touchscreen display based on the contact position information from the pressure sensor 71. In the figure, the third column of the left line close to the left lateral surface of the mobile information device 80 which is touched by the thumb, and the fourth and fifth columns of the right line close to the right lateral surface touched by the middle finger and the annular finger, are located by the holding fingers. Therefore, in those areas, it is difficult to conduct the operation such as the tap operation, the slide operation, or the flick operation on the touchscreen display. As a result, the items are not arranged in those areas.

As described above, according to this embodiment, the positions of the fingers that hold the mobile information device are sensed, and the items are not arranged in the areas of the touchscreen display corresponding to those positions. As a result, the operability of the mobile information device is improved without allowing a part of the holding fingers to interfere with the input operation.

Also, because the sensor touch portions are installed on both the lateral surfaces of the mobile information device so as to cover a relatively wide range, the holding position of the mobile information device can be detected regardless of a dominant hand (right handedness, left handedness) of the user, or how to grip the device.

In the above embodiment, the description has been given of a method in which the items are not arranged in the area on the touchscreen display where the operation such as the tap operation, the slide operation, or the flick operation is difficult to conduct because the holding fingers are located thereon, based on the contact position information. Also, as described in the first embodiment, the items higher in the use frequency order are arranged in the areas higher in the use frequency order within the area in which the items are arranged, and the items are not arranged in the areas close to the holding fingers. With this configuration, the operability of the mobile information device is further improved.

The present invention has been described in detail and with reference to the special embodiments. However, it would be apparent from an ordinary skilled person that the present invention can be variously changed and modified without departing from the spirit and scope of the present invention.
The present invention is based on Japanese Patent Application No. 2010-074682 filed on March 29, 2010, and content thereof is incorporated herein by reference.

### Industrial Applicability

As described above, in the mobile information device according to the present invention, for example, the item higher in the use frequency order is automatically rearranged in the area higher in the use frequency order on the touchscreen display according to the characteristics of the user, the specifications of the device, or the input means to the touchscreen display. Thus, the items on the touchscreen display are automatically rearranged in the areas on the touchscreen display with the advantage that the operability of the user is improved. The present invention is useful to devices such as a PDA (personal digital assistant), a cellular phone, a personal computer, a game machine, and a camera.

### Description of Reference Signs

- 10, 80: Mobile Information Device
- 11: Touchscreen
- 12: Item
- 14: Area
- 21: Input Control Unit
- 22: Input Information Analysis Unit
- 23: User Use Information Management Unit
- 24: User Use Information Database
- 25: Display Configuration Control Unit
- 26: Display Control Unit
- 27: Display
- 28: Application Management Unit
- 29: Time Management Unit
- 61: Data Information
- 71: Pressure Sensor
- 72: Left Sensor Touch Portion
- 73: Right Sensor Touch Portion

## Claims

1. An information device comprising:
a display unit configured to display a plurality of items;
an input unit configured to detect a touch input;
an input information determination unit configured to determine a first operation conducted on any one of the plurality of items by the input unit for selecting any one of the plurality of items, and a second operation conducted on any one of a plurality of positions unrelated to positions corresponding to the plurality of items by the input unit for selecting none of the plurality of items, based on the touch input detected by the input unit;
a first recording unit configured to count and record a frequency at which the first operation is conducted for each of the plurality of items;
a second recording unit configured to count and record a frequency at which the second operation is conducted for each of the plurality of positions by the input unit; and
a display configuration control unit configured to display an item higher in the frequency on which the first operation is conducted among the plurality of items, at a position higher in the frequency on which the second operation is conducted among the plurality of positions by the input unit.

2. The information device according to claim 1,
wherein the first operation comprises tap operation, and the second operation comprises slide operation or flick operation.

3. The information device according to claim 1 or 2,
wherein the input unit comprises a touchscreen.

4. A mobile information device configured to display a plurality of items on a touchscreen display for conducting input operation through the touchscreen, said mobile information device comprising:
an input control unit configured to input and control input information on used items among the plurality of items and used areas through the input operation;
an input information analysis unit configured to analyze the used items and the used areas based on the input information;
a user use information management unit configured to determine the use frequency orders of the used items and the used areas based on analysis information of the input information analysis unit, and manage user use information which associates additional information with the input information; and
a display configuration control unit configured to determine an arrangement of the plurality of items on the touchscreen display based on the use frequency orders of the used items and the used areas.

5. The mobile information device according to claim 4,
wherein the input information comprises: touch coordinate positions and release coordinate positions on the touchscreen display; and the number of touches.

6. The mobile information device according to claim 5,
wherein the use frequency orders of the used items and the used areas are determined by arranging the number of touches in descending order.

7. The mobile information device according to claim 4,
wherein the additional information comprises time information and application information.

8. The mobile information device according to claim 4,
wherein if areas higher in the use frequency order intersect with each other, the display configuration control unit determines an intersection as the area higher in the priority order, and
wherein if the areas higher in the use frequency order are dispersed, the display configuration control unit determines an area surrounded by connecting a plurality of higher points to each other as the area higher in the priority order.

9. The mobile information device according to claim 4,
wherein the display configuration control unit displays the items used in the areas higher in the use frequency order in a larger size, and displays the items other than the items used in the area other than the areas higher in the use frequency order in a smaller size.

10. The mobile information device according to claim 4,
wherein the display configuration control unit displays an item of a lower layer or a same system of the item higher in the use frequency order in the area other than the area higher in the use frequency order.

11. The mobile information device according to claim 4,
wherein the display configuration control unit displays an other menu access item as an access to a function lower in the use frequency which is not displayed on the touchscreen display.

12. The mobile information device according to claim 4,
wherein the display configuration control unit displays the additional information other than the plurality of items in the area other than the area higher in the use frequency order in a superimposed manner.

13. The mobile information device according to claim 4,
wherein the display configuration control unit arranges the plurality of items based on sensor information from a built-in pressure sensor.
